# EUROPEAN PATENT APPLICATION

(11) **EP 4 768 864 A1**
(43) Date of publication of application: **01.07.2026**
(21) Application number: 24856262.1
(22) Date of filing: 05.08.2024
(51) Int. Cl.: G01C 21/26, B64U 10/60, G01C 21/36, G05D 1/46, G08G 1/005, G08G 5/00

(54) **MOVEMENT ASSISTANCE DEVICE AND MOVEMENT ASSISTANCE METHOD**

(30) Priority: 21.08.2023 JP 2023133771
(71) Applicant: Sony Group Corporation, Tokyo 108-0075 (JP)
(72) Inventor: MOTOKURA, Kurena, Atsugi-shi, Kanagawa 243-0014 (JP); NISHIKAWA, Jun, Tokyo 108-0075 (JP); YAMAMOTO, Yusuke, Tokyo 108-0075 (JP); NISHIYAMA, Mariko, Tokyo 108-0075 (JP); KIYOTA, Yurika, Tokyo 108-0075 (JP)
(74) Representative: MFG Patentanwälte Meyer-Wildhagen Meggle-Freund Gerhard PartG mbB
(86) International application number: PCT/JP2024/027843
(87) International publication number: WO 2025/041570

(57) **Abstract**

The present technology relates to a movement assistance device and a movement assistance method that can safely guide a user. The movement assistance device includes a movement route determination unit configured to select, from at least one or more travel patterns, one travel pattern of guiding a user to a target position, and a drive control unit configured to control a drive unit such that an assistance force is applied to the user, the assistance force being a resultant force of a virtual force and a guidance force, the virtual force being a force of stabilizing a posture of the user, the guidance force being a force of guiding the user and corresponding to the selected travel pattern. The present technology can be applied to a movement assistance system using a drone.

## Description

### Technical Field

The present technology relates to a movement assistance device and a movement assistance method, and particularly relates to a movement assistance device and a movement assistance method that can safely guide a user.

### Background Art

Conventionally, a technology has been proposed in which a direction presentation unit incorporated in or externally attached to a shoe of a user gives a stimulus to a foot of the user to indicate the travel direction (for example, see PTL 1).

### Citation List

### Patent Literature

PTL 1: JP 2015-75386 A

### Summary

### Technical Problem

However, the technology described in PTL 1 only indicates the travel direction of the user, and does not consider guiding the user safely.

The present technology has been made in view of such circumstances, and an object thereof is to make it possible to guide a user safely.

### Solution to Problem

A movement assistance device according to an aspect of the present technology includes a movement route determination unit configured to select, from at least one or more travel patterns, one travel pattern of guiding a user to a target position, and a drive control unit configured to control a drive unit such that an assistance force is applied to the user, the assistance force being a resultant force of a virtual force and a guidance force, the virtual force being a force of stabilizing a posture of the user, the guidance force being a force of guiding the user and corresponding to the selected travel pattern.

A movement assistance method according to an aspect of the present technology includes selecting, by a movement assistance device, from at least one or more travel patterns, one travel pattern of guiding a user to a target position, and controlling, by the movement assistance device, a drive unit such that an assistance force is applied to the user, the assistance force being a resultant force of a virtual force and a guidance force, the virtual force being a force of stabilizing a posture of the user, the guidance force being a force of guiding the user and corresponding to the selected travel pattern.

In an aspect of the present technology, one travel pattern of guiding a user to a target position is selected from at least one or more travel patterns, and a drive unit is controlled such that an assistance force is applied to the user, the assistance force being a resultant force of a virtual force and a guidance force, the virtual force being a force of stabilizing a posture of the user, the guidance force being a force of guiding the user and corresponding to the selected travel pattern.

### Brief Description of Drawings

[Fig. 1] Fig. 1 is a diagram for describing a basic concept of the present technology.
[Fig. 2] Fig. 2 is a diagram for describing a virtual force, a guidance force, and an assistance force.
[Fig. 3] Fig. 3 is a block diagram illustrating a first embodiment of a movement assistance system to which the present technology is applied.
[Fig. 4] Fig. 4 is a flowchart for describing movement assistance processing executed by the movement assistance system of Fig. 3.
[Fig. 5] Fig. 5 is a schematic external view of a second embodiment of the movement assistance system to which the present technology is applied.
[Fig. 6] Fig. 6 is a block diagram illustrating the second embodiment of the movement assistance system to which the present technology is applied.
[Fig. 7] Fig. 7 is a diagram for describing a right-angle pattern.
[Fig. 8] Fig. 8 is a diagram for describing a curve pattern.
[Fig. 9] Fig. 9 is a flowchart for describing movement assistance processing executed by the movement assistance system of Figs. 5 and 6.
[Fig. 10] Fig. 10 is a state machine diagram of the movement assistance system of Figs. 5 and 6.
[Fig. 11] Fig. 11 is a block diagram illustrating a configuration example of a computer.

### Description of Embodiments

Hereinafter, embodiments for implementing the present technology will be described. Description will be made in the following order.
1. Overview of Present Technology
2. First Embodiment
3. Second Embodiment
4. Modifications
5. Others

### 1. Overview of Present Technology

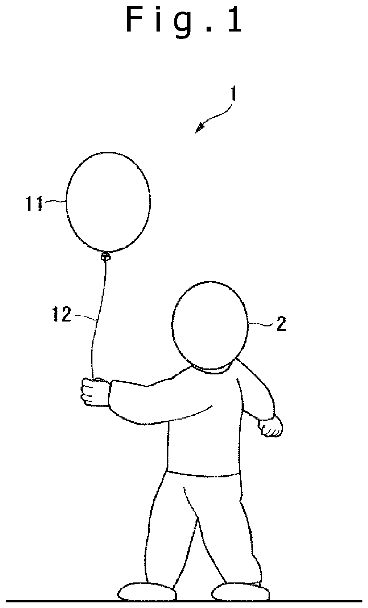

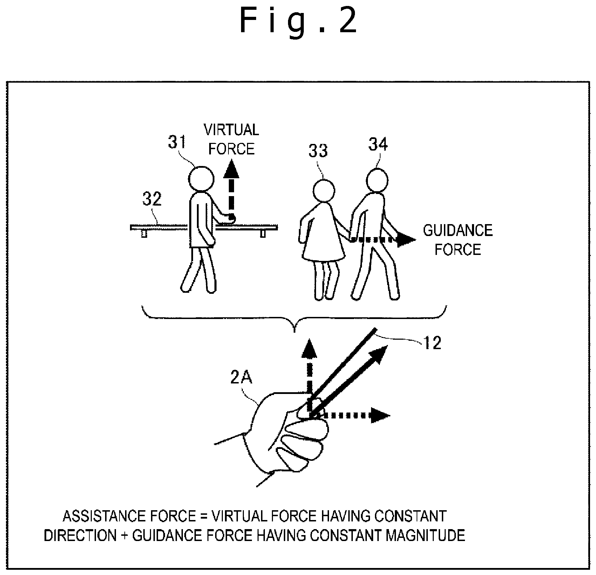

First, an overview of the present technology will be described with reference to Figs. 1 and 2.

Fig. 1 illustrates a configuration example of a balloon-type robot 1 representing a basic concept of the present technology (particularly, a second embodiment of the present technology described below).

The balloon-type robot 1 includes a balloon-type flight unit 11 and a string 12. The flight unit 11 is tied to the string 12 and can fly autonomously. The flight unit 11 flies, for example, at a position higher than the eye level of a user 2.

The user 2 moves while holding a portion near an end of the string 12. Then, the balloon-type robot 1 guides the user 2 to a target position when the user 2 needs to be supported.

Here, since the balloon-type robot 1 flies at a position higher than the eye level of the user 2, the balloon-type robot 1 can monitor a wide range around the user 2 from a high position. Therefore, the balloon-type robot 1 can detect obstacles around the user 2 in advance and guide the user 2 so that the obstacles are avoided.

Further, the balloon-type robot 1 flies in the air and thus can stably guide the user 2 without falling or the like even on a road with a staircase or unevenness.

On the other hand, the balloon-type robot 1 simply follows the user 2 when the user does not need to be supported.

Fig. 2 illustrates a breakdown of forces applied to a hand 2A of the user 2 to guide the user 2.

An assistance force, which is a resultant force of a virtual force and a guidance force, is applied to the hand 2A of the user 2.

The virtual force is a force for exerting a light-touch effect that stabilizes the posture (standing posture and walking posture) of the user. For example, as illustrated in Fig. 2, a force for supporting a user 31 upward by a handrail 32 corresponds to the virtual force.

The guidance force is a force that acts in a direction for guiding the user 2 (hereinafter referred to as a guidance direction) and guides the user 2 in the guidance direction. For example, as illustrated in Fig. 2, a force applied to the left hand of a user 33 when a user 34 pulls the left hand of the user 33 to guide the user 33 corresponds to the guidance force.

The assistance force, which is a resultant force of the virtual force and the guidance force, is applied to the hand 2A of the user 2. Specifically, a tensile force generated by the flight unit 11 pulling the string 12 is applied as the assistance force to the hand 2A of the user 2 via the string 12.

This guides the user 2 in the guidance direction and stabilizes the posture with the light-touch effect, and thus the user 2 can safely move to a target position.

As described below, the magnitude of the virtual force changes depending on the position of a part (hereinafter referred to as a target part) of the user's body to which the virtual force is applied. The magnitude of the virtual force is the magnitude of the virtual force applied to the target part of the user 2, in other words, the magnitude of the virtual force acting on the target part of the user. The target part serves as a point of action of the virtual force acting on the user. In the examples of Figs. 1 and 2, the hand 2A of the user 2 is the target part.

For example, the magnitude of the virtual force is set within a range of 0.3 N to 0.5 N based on the vertical position of the target part. For example, this is a magnitude close to that of an upward force applied to the user's hand by a handrail when the user lightly touches the handrail.

On the other hand, the direction of the virtual force is fixed to the vertical direction. That is, the direction of the virtual force is set to be vertically upward or vertically downward. The direction of the virtual force is a direction in which the virtual force is applied to the target part of the user, in other words, a direction in which the virtual force acts on the target part of the user.

In contrast, the magnitude of the guidance force is set to be constant. The magnitude of the guidance force is the magnitude of the guidance force applied to the target part of the user, in other words, the magnitude of the guidance force acting on the target part of the user.

For example, the magnitude of the guidance force is set within a range of 0.2 N to 0.4 N.

On the other hand, the direction of the guidance force changes according to the direction (guidance direction) in which the user is guided. The direction of the guidance force is a direction in which the guidance force is applied to the target part of the user, in other words, a direction in which the guidance force acts on the target part of the user.

In this manner, the direction of the virtual force is constant and the magnitude of the guidance force is constant, and thus the user 2 can intuitively distinguish between the virtual force and the guidance force.

The ranges of the magnitudes of the virtual force and the guidance force described above are based on results of a sensory test in which the virtual force and the guidance force are simultaneously applied to a person for evaluation. Specifically, the obtained results show that when the virtual force and the guidance force are simultaneously applied to a person with closed eyes, it is highly probable that the posture of the person can be stabilized and the guidance direction can be clearly recognized as long as the magnitudes of the virtual force and the guidance force are within the above-described ranges.

However, since the sensations of the virtual force and the guidance force vary from person to person, the ranges are not necessarily limited to those described above.

### 2. First Embodiment

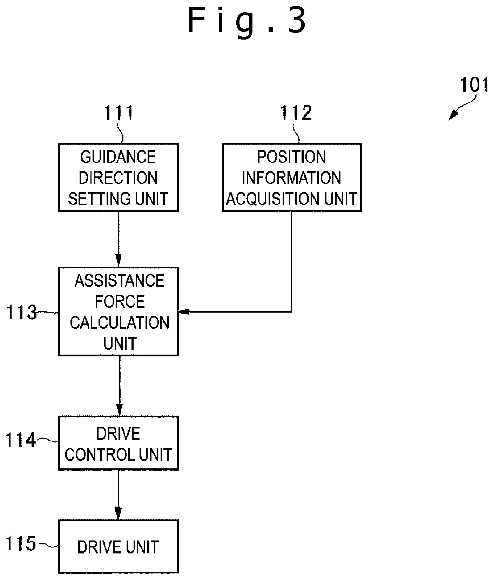

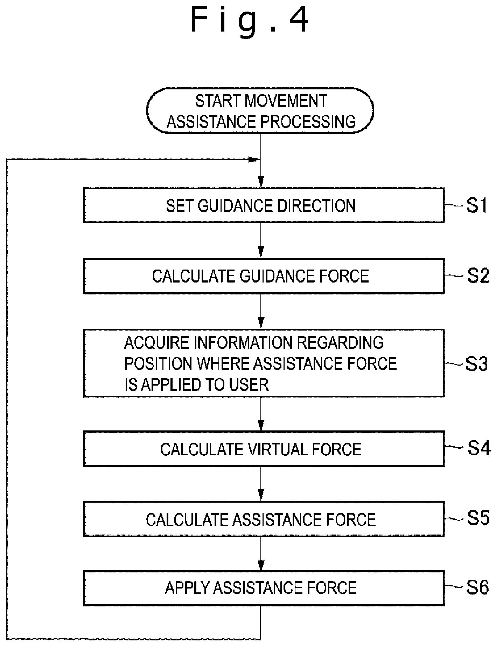

Next, a first embodiment of the present technology will be described with reference to Figs. 3 and 4.

### Configuration Example of Movement Assistance System 101

Fig. 3 illustrates a configuration example of functions of a movement assistance system 101 to which the present technology is applied.

The movement assistance system 101 is a system that safely guides the user by applying, to the user, the assistance force described above with reference to Fig. 2.

The movement assistance system 101 may have any form as long as it can apply the assistance force to any part (target part) of the user's body. Examples of the movement assistance system 101 include various types such as a mobile type and a wearable type.

The mobile-type movement assistance system 101 includes, for example, a mobile body such as a robot or a drone, and applies the assistance force to the user by moving the mobile body. For example, in a manner similar to the balloon-type robot 1 in Fig. 1, the mobile body connected to a string moves, and thus the assistance force is applied to the user's hand holding the string. For example, the mobile body moves in a state in which the user touches the mobile body by, for example, holding the mobile body with the hand, and thus the assistance force is applied to a part of the mobile body touched by the user.

The wearable-type movement assistance system 101 is constituted by, for example, a wearable device worn on the body of the user. The form of the wearable device is not particularly limited. For example, assumed forms include a ring type worn on a finger, a bracelet type wound around a wrist or an arm, a backpack type carried on the back, a shoulder type hung on a shoulder, a belt type wound around the waist, and the like. The wearable-type movement assistance system 101 applies the assistance force to a part (target part) of the user's body on which the wearable-type movement assistance system 101 is worn, such as a finger, a wrist, an arm, the back, a shoulder, the waist, or the like.

The movement assistance system 101 includes a guidance direction setting unit 111, a position information acquisition unit 112, an assistance force calculation unit 113, a drive control unit 114, and a drive unit 115.

The guidance direction setting unit 111 sets a direction (guidance direction) for guiding the user. The guidance direction setting unit 111 supplies information indicating the set guidance direction to the assistance force calculation unit 113.

For example, the guidance direction setting unit 111 appropriately selects (determines), from at least one or more travel patterns, a travel pattern used at the time of guiding the user, based on information regarding the environment around the user or the like, and sets a guidance direction according to the determined travel pattern.

The travel pattern mentioned here is a pattern representing how the movement assistance system 101 guides the user during the guidance. More specifically, the travel pattern is a pattern representing how to travel on a route, such as how to guide (move) the user during the guidance. In other words, the travel pattern is a pattern representing the movement of the movement assistance system 101 during the guidance, that is, how the movement assistance system 101 travels, such as how the movement assistance system 101 moves to guide the user.

The position information acquisition unit 112 acquires information regarding the position of the target part of the user. The position information acquisition unit 112 supplies the information regarding the position of the target part of the user to the assistance force calculation unit 113.

The assistance force calculation unit 113 calculates the magnitudes and the directions of the virtual force and the guidance force based on the guidance direction and the position of the target part. The assistance force calculation unit 113 calculates the magnitude and the direction of the assistance force based on the magnitudes and the directions of the virtual force and the guidance force. The assistance force calculation unit 113 supplies information indicating the magnitude and the direction of the assistance force to the drive control unit 114.

The drive control unit 114 controls the drive unit 115 so that the calculated assistance force is applied to the target part of the user.

The drive unit 115 is a unit driven to generate the assistance force and apply the assistance force to the user under control of the drive control unit 114. For example, the drive unit 115 is constituted by a power source such as an engine or a motor of the mobile body. For example, the drive unit 115 is constituted by a motor, an actuator, or the like of the wearable device.

### Movement Assistance Processing

Next, movement assistance processing executed by the movement assistance system 101 will be described with reference to a flowchart of Fig. 4.

This processing starts, for example, when the user instructs the movement assistance system 101 to execute guidance, and ends when the user arrives at a target position.

In step S1, the guidance direction setting unit 111 sets a guidance direction. For example, the guidance direction setting unit 111 acquires information regarding the current position and the target position of the user and the environment around the user.

Note that a method of acquiring the information regarding the current position and the target position of the user and the environment around the user is not particularly limited. For example, the information regarding the current position of the user is acquired using a global navigation satellite system (GNSS) receiver or the like. For example, the information regarding the target position is acquired through user input. For example, the information regarding the environment around the user is acquired based on sensing information obtained by sensing the surroundings of the user with various sensors.

For example, the guidance direction setting unit 111 sets a direction in which the user should travel based on a positional relationship between the current position and the target position of the user, situations of streets or passages around the user, situations of obstacles around the user, and the like. Further, for example, the guidance direction setting unit 111 detects the inclination of a place in the direction in which the user should travel based on the acquired information. The inclination of the place in the direction in which the user should travel is, for example, the inclination of a slope, a staircase, or the like present in the direction in which the user should travel.

The guidance direction setting unit 111 sets the direction in which the user should travel to a direction of the horizontal direction (left-right direction) of the guidance direction (hereinafter referred to as a horizontal guidance direction). The guidance direction setting unit 111 sets the inclination of the place in the direction in which the user should travel to a direction of the vertical direction (up-down direction) of the guidance direction (hereinafter referred to as a vertical guidance direction).

In this case, as necessary, a travel pattern is determined based on the information regarding the environment around the user, and the like, and the horizontal guidance direction and the vertical guidance direction are set according to the travel pattern.

When an assistance force acts only in a direction upward or downward relative to the horizontal direction, the guidance direction setting unit 111 sets the vertical guidance direction to the horizontal direction.

For example, when the movement assistance system 101 is constituted by the balloon-type robot 1 in Fig. 1, the flight unit 11 basically flies at a position higher than the user's hand, and thus the assistance force acts only upward relative to the horizontal direction. In this case, the vertical guidance direction is set to the horizontal direction.

For example, when the movement assistance system 101 is constituted by a small-dog-type robot, the robot basically walks at a position lower than the user's hand, and thus the assistance force acts only downward relative to the horizontal direction. In this case, the vertical guidance direction is set to the horizontal direction.

The guidance direction setting unit 111 supplies information indicating the set guidance direction to the assistance force calculation unit 113.

In step S2, the assistance force calculation unit 113 calculates a guidance force. Specifically, the assistance force calculation unit 113 calculates, as the guidance force, a force that acts with a predetermined magnitude in the guidance direction set by the guidance direction setting unit 111.

In step S3, the position information acquisition unit 112 acquires information regarding the position at which the assistance force is applied to the user. That is, the position information acquisition unit 112 acquires information regarding the position of a target part of the user.

Note that a method of acquiring the information regarding the position of the target part of the user is not particularly limited.

For example, when the movement assistance system 101 is a mobile-type system, the position information acquisition unit 112 detects the position of a part of the user's body in contact with the movement assistance system 101 as the position of the target part based on a captured image of the user. For example, in the case of the balloon-type robot 1 in Fig. 1, the position of the user's hand in contact with the balloon-type robot 1 is detected as the position of the target part.

For example, when the movement assistance system 101 is a wearable-type system, the position information acquisition unit 112 detects the position at which the user wears the movement assistance system 101 as the position of the target part.

The position information acquisition unit 112 supplies the information regarding the position of the target part of the user to the assistance force calculation unit 113.

In step S4, the assistance force calculation unit 113 calculates a virtual force.

For example, when the vertical guidance direction is the horizontal direction or upward relative to the horizontal direction (when the vertical guidance direction is inclined upward relative to the horizontal direction), the assistance force calculation unit 113 sets the direction of the virtual force to be vertically upward. However, when the assistance force acts only downward relative to the horizontal direction, the assistance force calculation unit 113 sets the direction of the virtual force to be vertically downward even when the guidance direction is the horizontal direction.

For example, when the vertical guidance direction is downward relative to the horizontal direction (when the vertical guidance direction is inclined downward relative to the horizontal direction), the assistance force calculation unit 113 sets the direction of the virtual force to be vertically downward.

For example, the assistance force calculation unit 113 sets the magnitude of the virtual force based on the vertical height of the target part.

Specifically, for example, in a case where the direction of the virtual force is vertically upward, when the vertical height of the target part is less than a predetermined height H1, the assistance force calculation unit 113 sets the magnitude of the virtual force to a value proportional to the difference in height between the height H1 and the target part. Accordingly, the vertically upward virtual force increases as the position of the target part becomes lower. On the other hand, the assistance force calculation unit 113 sets the magnitude of the virtual force to zero when the vertical height of the target part is equal to or more than the height H1.

On the other hand, in a case where the direction of the virtual force is vertically downward, when the vertical height of the target part exceeds a predetermined height H2, the assistance force calculation unit 113 sets the magnitude of the virtual force to a value proportional to the difference in height between the target part and the height H2. Accordingly, the vertically downward virtual force increases as the position of the target part becomes higher. On the other hand, when the vertical height of the target part is equal to or less than the height H2, the assistance force calculation unit 113 sets the magnitude of the virtual force to zero.

In step S5, the assistance force calculation unit 113 calculates an assistance force. That is, the assistance force calculation unit 113 calculates a resultant force of the virtual force and the guidance force as the assistance force. The assistance force calculation unit 113 supplies information indicating the magnitude and the direction of the assistance force to the drive control unit 114.

In step S6, the movement assistance system 101 applies the assistance force. Specifically, the drive control unit 114 controls the drive unit 115 so that the assistance force having the calculated magnitude and direction is applied to the target part of the user.

Thereafter, the processing returns to step S1, and the processing in and after step S1 are executed.

In this way, the user is guided in the three-dimensional guidance direction by the guidance force, and the posture of the user is stabilized by the virtual force. As a result, the user can safely move in the guidance direction without falling down. That is, the user can be safely guided.

### 3. Second Embodiment

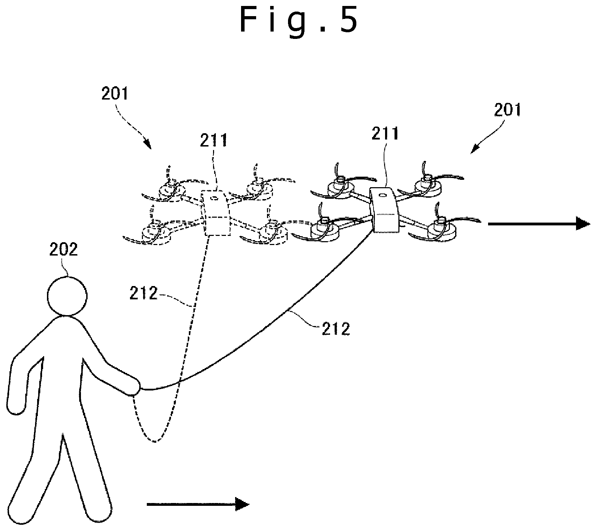

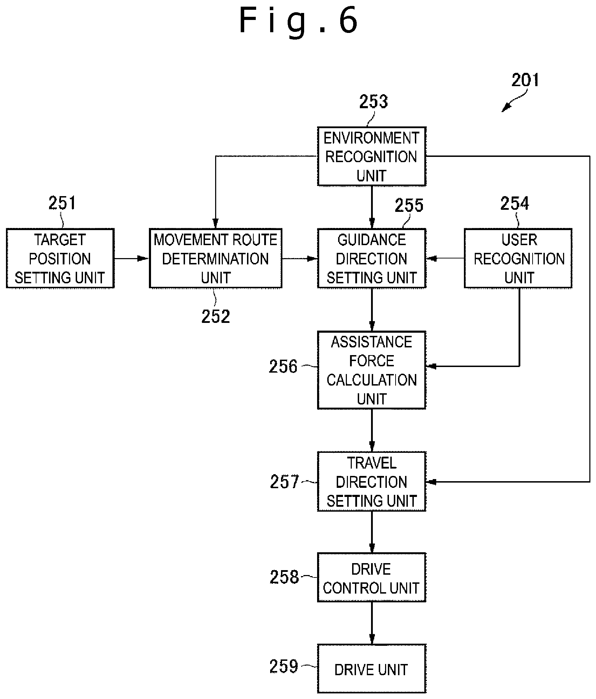

Next, a second embodiment of the present technology will be described with reference to Figs. 5 and 6.

### Configuration Example of Movement Assistance System 201

First, a configuration example of a movement assistance system 201 to which the present technology is applied will be described with reference to Figs. 5 and 6.

Fig. 5 schematically illustrates an external configuration example of the movement assistance system 201.

The movement assistance system 201 is a mobile-type movement assistance system. The movement assistance system 201 includes a drone 211 and a string 212. One end of the string 212 is connected to the drone 211, and another end of the string 212 is held by a user 202.

The drone 211 applies an assistance force to the user 202 via the string 212, thereby guiding the user 202 in a guidance direction and also stabilizing the posture of the user 202.

Fig. 6 illustrates a configuration example of functions of the movement assistance system 201.

The movement assistance system 201 includes a target position setting unit 251, a movement route determination unit 252, an environment recognition unit 253, a user recognition unit 254, a guidance direction setting unit 255, an assistance force calculation unit 256, a travel direction setting unit 257, a drive control unit 258, and a drive unit 259. These units are provided in the drone 211, for example.

The target position setting unit 251 sets a target position, which is a point serving as a target for guiding the user, based on user input or the like. The target position setting unit 251 supplies information indicating the target position to the movement route determination unit 252.

The movement route determination unit 252 determines a movement route for guiding the user to the target position based on the information indicating the target position supplied from the target position setting unit 251 and information regarding the environment around the user and the drone 211 supplied from the environment recognition unit 253. The movement route determination unit 252 supplies information indicating the determined movement route to the guidance direction setting unit 255.

For example, the movement route determination unit 252 appropriately determines one travel pattern from at least one or more travel patterns, and determines a movement route based on the determined travel pattern.

In particular, it can be said that the travel pattern mentioned here is a flight pattern of the drone 211 (movement assistance system 201) when the user is guided to the target position. Hereinafter, the travel pattern of the drone 211 will be also referred to as a flight pattern.

The environment recognition unit 253 executes processing of recognizing the environment around the user and the drone 211 using, for example, various sensors and acquires information regarding the environment around the user and the drone 211. For example, the environment recognition unit 253 acquires information regarding obstacles around the user and the drone 211, information regarding the shape of a road (street or passage) that the user travels, and the like. The environment recognition unit 253 supplies the information indicating the environment around the user and the drone 211 to the movement route determination unit 252, the guidance direction setting unit 255, and the travel direction setting unit 257.

The user recognition unit 254 executes processing of recognizing the state of the user using, for example, various sensors, a GNSS receiver, and the like, and acquires information regarding the state of the user. For example, the user recognition unit 254 acquires information regarding the current position of the user and the position of the user's hand holding the string 212 (hereinafter referred to as a string holding position) as a target part. The user recognition unit 254 supplies the information regarding the state of the user to the guidance direction setting unit 255 and the assistance force calculation unit 256 as necessary.

The guidance direction setting unit 255 sets a direction for guiding the user (that is, a guidance direction) based on the movement route, the current position of the user, and the environment around the user and the drone 211. The guidance direction setting unit 255 supplies information indicating the set guidance direction to the assistance force calculation unit 256.

The assistance force calculation unit 256 calculates the magnitudes and the directions of a virtual force and a guidance force based on the guidance direction and the string holding position. The assistance force calculation unit 256 calculates the magnitude and the direction of an assistance force based on the magnitudes and the directions of the virtual force and the guidance force. The assistance force calculation unit 256 supplies information indicating the magnitude and the direction of a tensile force of the string 212, which is a force applied to the user as the assistance force, and the length of the string 212 to the travel direction setting unit 257.

The travel direction setting unit 257 sets the travel direction of the drone 211 based on the direction of the tensile force of the string 212, the length of the string 212, the environment around the drone 211, and the like. The travel direction setting unit 257 supplies information indicating the magnitude and the direction of the tensile force of the string 212 and the travel direction of the drone 211 to the drive control unit 258.

The drive control unit 258 controls the drive unit 259 so that the drone 211 flies according to the travel direction and the calculated tensile force is applied to the string holding position of the user via the string 212.

For example, the drive control unit 258 controls the drive unit 259 so that the drone 211 flies (moves) according to the flight pattern (travel pattern) determined by the movement route determination unit 252.

The drive unit 259 is a unit driven to cause the drone 211 to fly and apply the tensile force to the string 212 under control of the drive control unit 258. For example, the drive unit 259 is constituted by a power source such as a motor for causing the drone 211 to fly.

### Flight Pattern

Here, an example of the flight pattern of the drone 211 will be described.

For the drone 211, an appropriate flight pattern is prepared in advance for each shape portion of a road (street or passage) that the user travels when being guided to a target position, such as a linear portion or a right or left turn portion.

As an example, in a case where the road that the user travels when being guided is curved, such as a case where the user makes a right/left turn, that is, a right turn or a left turn when being guided, the movement route determination unit 252 selects, for example, either a right-angle pattern or a curve pattern as a flight pattern. In other words, one of two flight patterns, the right-angle pattern and the curve pattern, is selected.

The right-angle pattern is a flight pattern used when the user is guided to turn at a right angle at a portion of a road such as a corner. In other words, the right-angle pattern is a flight pattern in which the user is moved linearly, then rotated in a stopped state, and further moved linearly.

The curve pattern is a flight pattern used when the user is guided to turn at a portion of a road such as a corner in a curved manner, that is, gently (gradually) little by little. In other words, the curve pattern is a flight pattern in which the user is moved in a curved manner so that the user moves along a gentle curve.

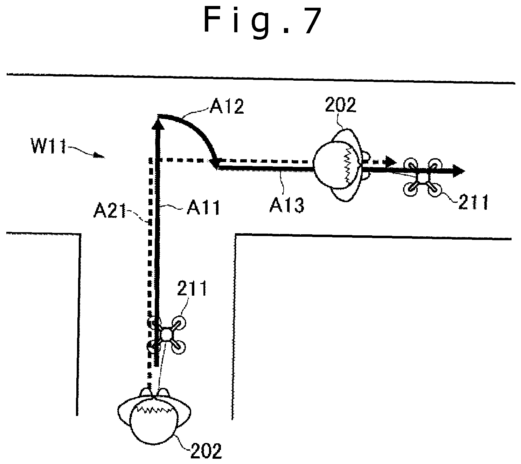

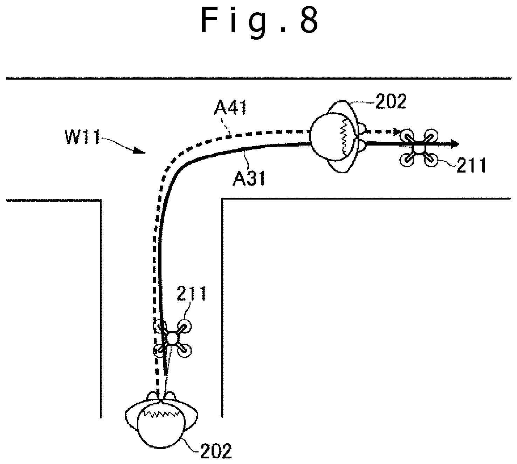

Specific examples of the right-angle pattern and the curve pattern will be described with reference to Figs. 7 and 8. In Figs. 7 and 8, the same reference numerals are given to portions corresponding therebetween, and the description thereof will be appropriately omitted.

Fig. 7 illustrates an example of the right-angle pattern. In this example, the user 202 turns right at a corner portion of a road W11 leading to a target position.

In this case, in the right-angle pattern, the drone 211 moves along a route (movement route) indicated by an arrow A11 to an arrow A13, thereby achieving guidance such that the user 202 turns at a right angle (turns right) at the corner portion of the road W11. In particular, here, a broken line A21 bent at a right angle indicates a movement route of the user 202 guided by the drone 211 in the right-angle pattern.

Specifically, in the right-angle pattern, the drone 211 first moves linearly (goes straight) to a position where the user 202 is to turn right, as indicated by the arrow A11.

In this example, the drone 211 moves to a position slightly above the center of the road W11 in the drawing. Since the drone 211 linearly moves to this position, the user 202 linearly moves (is linearly guided) to the center position at the corner portion of the road W11.

Next, as indicated by an arrow A12, the drone 211 moves clockwise by 90 degrees on an arc having a radius equal to the length of the string 212, in more detail, the length of the string 212 when the road W11 is viewed from above (vertical direction), with the position of the user 202 (the position at which the user 202 turns right) as the center. That is, the drone 211 makes a turn along the circumference (arc) so that the direction changes clockwise by 90 degrees when the road W11 is viewed from above (vertical direction).

Due to such a turn, the user 202 is guided to rotate clockwise by 90 degrees while standing still on the spot, i.e., without moving the position. As a result, the user 202 faces the direction after turning right.

When the drone 211 turns while traveling along the route indicated by the arrow A12, the user 202 is guided so as to be rotated without being moved. Therefore, the direction of the guidance force applied to the user 202 at this time, that is, the guidance direction is not the direction in which the user 202 should move but the direction in which the user 202 should face.

After rotating the user 202, the drone 211 moves linearly (goes straight) from the right turn position as indicated by the arrow A13. Accordingly, the user 202 also moves linearly (is guided linearly) in the direction after turning right at the corner portion of the road W11, thereby completing a right turn of the user 202.

With the guidance described above, the user 202 turns right at a right angle at the corner portion of the road W11. When the user 202 is linearly moved before or after a right or left turn during guidance in the right-angle pattern, the user 202 may be moved linearly along the road W11 or may be moved linearly in an oblique direction with respect to the road W11.

In the case of guidance on the curved road as described above, the user 202 gently curves (turns) in the curve pattern described below, and thus it may be difficult for the user 202 to recognize a turning position and direction.

In contrast, in the case of guidance in the right-angle pattern, the user 202 stops once at the time of turning, and thus the user 202 can more easily and reliably recognize a turning position and direction.

Although the example of turning right at a right angle has been described here, the angle at which the user 202 turns on a road is not limited to 90 degrees (right angle), and may be any angle.

For example, when a road that the user 202 travels bends at a predetermined angle different from a right angle, the drone 211 moves linearly to a position on the road where the user 202 is to turn, and then rotates by the above predetermined angle so as to face the direction in which the drone 211 is to travel after the turning. After the turning, the drone 211 moves linearly again.

Accordingly, the user 202 moves linearly, then rotates by the predetermined angle, and then moves linearly, thereby achieving a right or left turn.

Hereinafter, a flight pattern in which a linear movement and a rotation at an angle different from 90 degrees are combined in a such a manner is also referred to as a right-angle pattern for convenience. From a different perspective, a flight pattern in which a linear movement and a rotation at a predetermined angle including 90 degrees are combined can be referred to as a linear pattern. In this case, the right-angle pattern is a special example of the linear pattern.

Fig. 8 illustrates an example of the curve pattern. In this example, as in Fig. 7, the user 202 turns right at the corner portion of the road W11 leading to the target position.

In the curve pattern, the drone 211 moves along a curved route (movement route) indicated by an arrow A31, thereby achieving guidance such that the user 202 turns (turns right) at the corner portion of the road W11 in a curved manner, that is, gently little by little. In particular, here, a curved line A41 bent to draw a gentle curve indicates a movement route of the user 202 guided in the curve pattern by the drone 211.

In this way, in the curve pattern, both the drone 211 and the user 202 move while gently curving. In this case, the direction of a guidance force applied to the user 202, that is, a guidance direction is always a direction in which the user 202 should travel, and the guidance force and a virtual force are always applied to the user 202.

With the above guidance, the user 202 turns right by turning at the corner portion of the road W11 in a curved manner.

In the case of guidance on such a curved road, in the above-described right-angle pattern, the direction is changed, that is, the direction of the user 202 is guided in a state where the user 202 is stopped. Therefore, it takes time to guide the user at the time of turning, and the movement route itself becomes long.

In contrast, with guidance in the curve pattern, right and left turns are realized while gently curving, so the user 202 does not stop at the timing of turning the corner, and the movement route itself may also be short. Therefore, the user 202 can be moved more smoothly in the curve pattern than in the right-angle pattern.

Although the example in which the user 202 turns right has been described with reference to Figs. 7 and 8, the user 202 is also guided in the right-angle pattern or the curve pattern as in the example described with reference to Figs. 7 and 8 even when turning left.

In a case where a flight pattern (travel pattern) such as the right-angle pattern or the curve pattern is selected on a curved road or the like when the user 202 is guided, for example, the movement route determination unit 252 can make the selection using information regarding the surrounding environment or information regarding the user 202.

For example, the information regarding the environment around the user 202 and the drone 211 can include at least one of information regarding obstacles around the user 202 and the drone 211 or information regarding a road that the user 202 travels when being guided.

For example, the information regarding the obstacles can include information such as the number of the obstacles, the position and the size of each obstacle, the shape and the type of each obstacle, whether each obstacle moves or not, and the moving direction and the moving speed of each obstacle.

In addition, the information regarding the road that the user 202 travels can include information regarding the shape of the road.

The information regarding the shape of the road may include not only shape information indicating the shape of the road itself such as a right-turn road or a crossroad, but also information indicating the type of the road, the inclination of the road, the width of the road, the turning angle of the road, the frequency of right and left turns within a predetermined distance from the current position on the road from the current position to the target position, that is, the number of corners (curved portions), and the like. For example, the information indicating the type of the road is information indicating what kind of road it is, such as a flat road, a slope, or a staircase.

The information regarding the user 202 can include at least one of user setting information set in advance by, for example, the user 202 or the like, urgency level information, passage history information, or use count information.

Examples of the user setting information can include selected-pattern information indicating a flight pattern selected (designated) in advance by the user 202, information indicating a preference of the user 202 (desire for guidance) regarding guidance set by the user 202, such as a preference for smooth movement or a preference for easy recognition of a turning position and direction. In addition, the user setting information may include information indicating a road registered (set) in advance as a road that the user 202 often (frequently) travels, and the like.

The urgency level information is information regarding the urgency level of guidance of the user 202. Specifically, for example, the urgency level information is information indicating the urgency level of guidance to a target position, such as whether or not the user 202 is in a hurry, which is input by the user 202 at the time of starting the guidance or during the guidance.

The passage history information is information regarding the passage history of the user 202. Specifically, for example, the passage history information is information indicating a history of roads that the user 202 has traveled in the past, that is, information that can identify each road along which the user 202 has been guided (road that the user 202 has passed), the number of times the user 202 has traveled the road (the number of times traveled), and the like.

The use count information is information regarding the use of the movement assistance system 201 by the user 202. Specifically, for example, the use count information is information indicating the number of times the user 202 has used guidance to a target position by the movement assistance system 201.

Here, a specific example of selection (determination) of a flight pattern at the time of guiding the user 202 will be described.

### Normal Right or Left Turn

For example, in the case of a normal right or left turn on a road that the user 202 travels when being guided, any pattern of the right-angle pattern or the curve pattern may be used. In such a case, it is conceivable to select, for example, a pattern set based on the user setting information, a pattern set in advance in the movement route determination unit 252, or the like, from the right-angle pattern and the curve pattern.

The normal right or left turn mentioned here is, for example, a right or left turn on a flat road having a sufficiently large width in a situation (environment) where there are few surrounding obstacles. For example, the type and the width of a road such as a flat road can be obtained from the information regarding a road that the user 202 travels when being guided, which is acquired as the information regarding the surrounding environment.

### Right or Left Turn on Staircase or Slope

When a road that the user 202 travels when being guided is a staircase or a slope, and there is a right or left turn after ascending the staircase or the slope or descending the staircase or the slope, the right-angle pattern is preferably selected as a flight pattern.

In a case where the user 202 passes the staircase or the slope when being guided, the user 202 may fall down when going up or down the staircase or the slope in an oblique direction.

In contrast, in a case where the user 202 turns right or left after the staircase or the slope, the risk of falling down can be further reduced when the user goes up or down the staircase or the slope and then turns at a right angle at a landing or the like. Therefore, when there is a right or left turn after the staircase or the slope, it is conceivable to select the right-angle pattern as a flight pattern.

### Turning Right or Left in Place with Many Obstacles in Surroundings, or the Like

The right-angle pattern may be selected when there are many obstacles around the user 202, when there is a large obstacle, or when the width of a road is narrow or the turning angle of a road is large (the road turns at an acute angle) and it is impossible to make a tight turn.

In these cases, when the user 202 is moved to a position where the user 202 is to turn right or left, then made to change the direction, for example, by turning at a right angle in a stopped state, and then further moved, the user 202 can be guided more reliably, so that the right-angle pattern is preferably selected. That is, when the right-angle pattern is selected, the user 202 can be more reliably guided to the position where the user 202 is to turn right or left or along a route to be traveled.

For example, it is conceivable to select the right-angle pattern when the angle at which the user 202 turns when being guided is equal to or more than a predetermined angle, and to select the curve pattern when the angle at which the user 202 turns is smaller than the predetermined angle.

In addition, for example, when there are many right and left turns, that is, when the frequency (the number of times) of right and left turns is equal to or more than a predetermined threshold value within a predetermined distance from the current position in a route from the current position to the target position of the user 202, the curve pattern may be selected.

### Right or Left Turn in Narrow Road

For example, when the user 202 turns right or left on a narrow road, such as when the width of a road that the user 202 travels, particularly, the width of a road immediately after a right or left turn, is equal to or less than a predetermined threshold, it may be difficult to guide the user 202 in the right-angle pattern depending on the length of the string 212. That is, in order to turn right or left in the right-angle pattern, a width equal to or more than the length of the string 212 is needed as the passage width of the road that the user 202 travels.

In the case of turning right or left on such a narrow road, when the user 202 turns in a curved manner (turns right or left) while traveling in an oblique direction with respect to a corner of the road, the user 202 can be guided more safely and reliably.

Therefore, when the user 202 turns right or left at a narrow place of the road that the user 202 travels, for example, when the width of the road and the length of the string 212 satisfy a predetermined relationship and there is a right or left turn, the curve pattern is preferably selected as a flight pattern.

### Selection Based on User Setting Information and the Like

When turning on a road with guidance, some users 202 prefer a turning position and direction to be easy to understand, and also some users 202 prefer to move smoothly.

In this case, at the time of turning right or left during the guidance, the right-angle pattern needs to be selected for the users 202 who prefer a turning position and direction to be easy to understand, and the curve pattern needs to be selected for the users 202 who prefer to move smoothly.

The realization of such a selection can be achieved by holding in advance, as the user setting information, a preference of each user 202 regarding guidance, specifically, information indicating that the user 202 prefers a turning position and direction to be easy to understand, or information indicating such as which of the right-angle pattern and the curve pattern is prioritized.

In addition, for example, a flight pattern may be selected based on the passage history information, the urgency level information, the use count information, or the like as the information regarding the user 202.

Specifically, for example, the right-angle pattern can be selected when the user 202 is guided along a road that the user 202 is not accustomed to traveling, and the curve pattern can be selected when the user 202 is guided along a road that the user 202 is accustomed to traveling.

In this case, whether the user 202 is accustomed to traveling along a road may be determined based on, for example, the number of times passed of the road identified by the passage history information. In addition, for example, a road that the user 202 often (frequently) travels, which is set (registered) as the user setting information, may be regarded as a road that the user 202 is accustomed to traveling.

Alternatively, for example, a flight pattern may be selected depending on whether or not the user 202 is accustomed to being guided to a target position by the movement assistance system 201, that is, whether or not the user 202 is accustomed to using the movement assistance system 201.

For example, it is conceivable to select the right-angle pattern as a flight pattern when the user 202 is not accustomed to using the movement assistance system 201, and select the curve pattern as a flight pattern when the user 202 is accustomed to using the movement assistance system 201.

In this case, the determination of whether or not the user 202 is accustomed to using the movement assistance system 201 be made based on, for example, the use count information or flag information, set by the user 202, indicating whether or not the user 202 is accustomed to using the movement assistance system 201.

In addition, for example, the determination of whether or not the user 202 is in a hurry may be made based on the urgency level information set by the user 202, and a flight pattern may be selected according to the determination result.

In such a case, for example, the curve pattern needs to be selected as a flight pattern when the user 202 is in a hurry, and the right-angle pattern needs to be selected as a flight pattern when the user 202 is not in a hurry.

Further, in the above description, the case has been described in which there are two patterns, that is, the right-angle pattern and the curve pattern, as flight patterns at the time of turning right or left, that is, flight patterns on a curved road. However, the present technology is not limited thereto, and a flight pattern may be selected from three or more patterns.

In such a case, conceivable examples of the flight pattern include a pattern in which a linear movement to a predetermined position and a rotation (direction change) in a stopped state at the position of the movement destination are repeated twice or more and then a linear movement is finally performed, thereby achieving a right or left turn. In this pattern, the user 202 turns little by little by moving linearly a plurality of times (three times or more). Thus, this pattern is effective, for example, when the user 202 turns little by little along a curve having a large radius.

In addition, although the example in which a flight pattern is selected at a right or left turn portion of a road that the user 202 travels has been described above, the flight pattern may be selected even at a linear portion of the road that the user 202 travels, or the flight pattern may not be selected at the linear portion of the road.

For example, when the selection of the flight pattern is made at the linear portion of the road, a linear travel pattern in which the drone 211 linearly moves along the road to make the user 202 move (be guided) linearly may be selected as the flight pattern.

In addition, by moving the drone 211 in an oblique direction with respect to the road at the linear portion of the road, an oblique pattern for moving (guiding) the user 202 in the oblique direction may be selected as the flight pattern. Such an oblique pattern is considered to be selected, for example, when the user 202 is guided to the opposite end of the road, or when, in the linear portion before the corner, the user 202 is guided to a position where the user 202 can easily turn the corner.

### Movement Assistance Processing

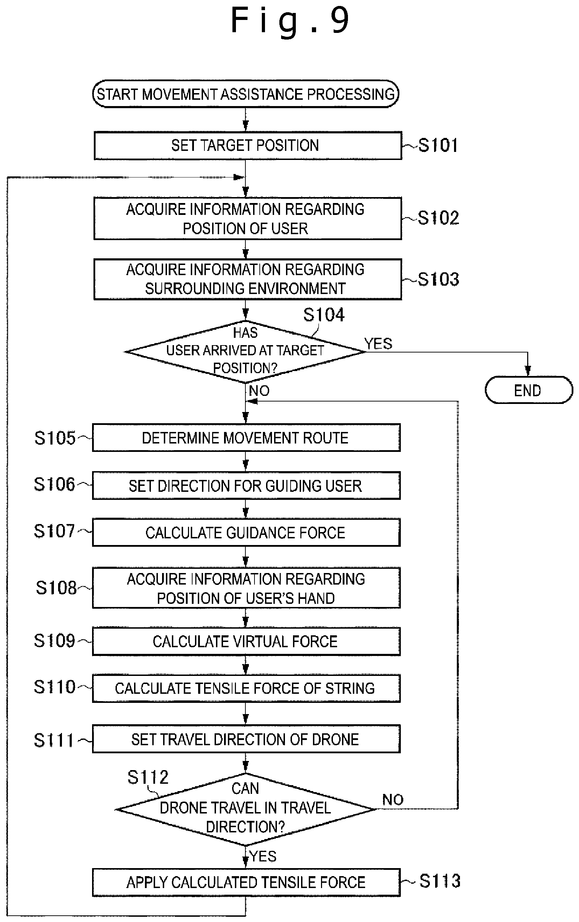

Next, movement assistance processing executed by the movement assistance system 201 will be described with reference to a flowchart of Fig. 9.

This processing starts, for example, when the user instructs the movement assistance system 201 to execute guidance.

In step S101, the target position setting unit 251 sets a target position. For example, the target position setting unit 251 sets the target position based on user input or the like. The target position setting unit 251 supplies information indicating the target position to the movement route determination unit 252.

In step S102, the user recognition unit 254 acquires information regarding the position of the user. For example, the user recognition unit 254 detects the current position of the user (movement assistance system 201) by receiving a GNSS signal from a GNSS satellite using a GNSS receiver. The user recognition unit 254 supplies information indicating the current position of the user to the guidance direction setting unit 255.

In step S103, the environment recognition unit 253 acquires information regarding the surrounding environment. For example, the environment recognition unit 253 acquires information regarding the environment around the drone 211 and the user by sensing the surroundings of the drone 211 and the user with various sensors.

For example, the environment recognition unit 253 acquires information regarding the above-described obstacles, such as the position, size, shape, type, and movement of each obstacle around the drone 211 and the user. In addition, for example, the environment recognition unit 253 detects (acquires) information regarding a road that the user travels, such as information regarding a place around the user, particularly, the shape of the road that the user travels, based on sensing results by various sensors, surrounding map information, and the like.

The environment recognition unit 253 supplies, as the information regarding the surrounding environment, the acquired information regarding the obstacles and the acquired information regarding the road that the user travels to the movement route determination unit 252 and the guidance direction setting unit 255.

In step S104, the guidance direction setting unit 255 determines whether or not the user has arrived at the target position based on the current position of the user. When it is determined that the user has not arrived at the target position, the processing proceeds to step S105. In this case, the guidance direction setting unit 255 appropriately instructs the movement route determination unit 252 to determine a movement route.

In step S105, the movement route determination unit 252 determines a movement route for guiding the user to the target position.

For example, the movement route determination unit 252 appropriately acquires information regarding the user including the user setting information, the urgency level information, the passage history information, the use count information, and the like described above, by an input operation from the user or a reading operation from a memory or the like (not illustrated).

The movement route determination unit 252 selects (determines) one flight pattern from at least one or more flight patterns (travel patterns) based on at least one of the information regarding the surrounding environment supplied from the environment recognition unit 253 or the acquired information regarding the user, and the information indicating the target position supplied from the target position setting unit 251.

Specifically, for example, in a case where there is a right or left turn in front of the user, that is, in a case where there is a curved road when the user is guided, the movement route determination unit 252 selects the right-angle pattern or the curve pattern as a flight pattern for guiding the user to the target position according to the shape of the road that the user travels, or the like. That is, one flight pattern for the curved road is selected from among two or more flight patterns including at least the right-angle pattern and the curve pattern.

When the flight pattern is selected, the movement route determination unit 252 determines a movement route of the user based on the selected flight pattern and the target position, and supplies information indicating the determined movement route and the target position to the guidance direction setting unit 255. In this case, for example, the movement route can be a rough movement route toward the target position.

In step S106, the guidance direction setting unit 255 sets a direction for guiding the user. For example, the guidance direction setting unit 255 sets a guidance direction based on the information indicating the movement route and the target position supplied from the movement route determination unit 252, the position of the drone 211, the current position of the user, the positions of obstacles, and the like.

In the step S106, the guidance direction setting unit 255 sets a guidance direction that allows the user to arrive at the target position with the shortest possible distance along the movement route, that is, the route corresponding to the selected (determined) flight pattern, while avoiding the obstacles.

Specifically, for example, the guidance direction setting unit 255 detects a movable range of the user based on the current position of the user and the environment around the user, and detects a movable range of the drone 211 based on the current position of the drone 211 and the environment around the drone 211.

The guidance direction setting unit 255 narrows down the movable range of the drone 211 based on restrictions such as the current position of the drone 211, the length of the string 212, and the moving speed of the drone 211.

Next, the guidance direction setting unit 255 sets a horizontal guidance direction for the user to move to the target position along the above-described movement route as closely as possible based on the movable range of the user and the movable range of the drone 211.

For example, the guidance direction setting unit 255 selects, as the horizontal guidance direction, a direction that minimizes an objective function of the movement distance of the user and the movement distance of the drone 211 under the following constraint conditions.

- The user moves within the movable range.
- The user does not go back with respect to the target position.
- The drone 211 satisfies the speed constraint.

Note that, for example, when the string 212 is a reel-type string and the length thereof is adjustable, the guidance direction setting unit 255 can set the horizontal guidance direction while adjusting the altitude of the drone 211 by adjusting the length of the string 212.

The guidance direction setting unit 255 sets a vertical guidance direction based on the inclination of a place in the horizontal guidance direction as viewed from the user. For example, when there is an upward slope or an upward staircase in the horizontal guidance direction as viewed from the user, the vertical guidance direction is set to an obliquely upward direction based on the inclination angle of the slope or the staircase. For example, when there is a downward slope or a downward staircase in the horizontal guidance direction as viewed from the user, the vertical guidance direction is set to an obliquely downward direction based on the inclination angle of the slope or the staircase.

The guidance direction setting unit 255 supplies information indicating the set guidance direction to the assistance force calculation unit 256.

In step S107, the assistance force calculation unit 256 calculates a guidance force. Specifically, the assistance force calculation unit 256 calculates, as the guidance force, a force that acts with a predetermined magnitude (constant magnitude) in the guidance direction set by the guidance direction setting unit 255. Thus, the guidance force for guiding the user to the target position is obtained according to the flight pattern selected in step S105.

In step S108, the user recognition unit 254 acquires information regarding the position of the user's hand, and supplies the information to the assistance force calculation unit 256.

For example, the user recognition unit 254 captures an image of the user using a camera, detects skeletal information of the user based on the captured image, and detects the position of the user's hand holding the string 212 (string holding position).

Further, for example, the user recognition unit 254 may detect the string holding position of the user based on sensor data from an inertial measurement unit (IMU) provided at an end portion of the string 212, a wristband for attaching the string 212 to the user, or the like.

Further, for example, a sensor provided at the drone 211 may detect a tag provided at the end portion of the string 212, the wristband for attaching the string 212 to the user, or the like, and thus the user recognition unit 254 may detect the relative position of the string holding position with respect to a predetermined position of the drone 211.

The user recognition unit 254 supplies information indicating the string holding position to the assistance force calculation unit 256.

In step S109, the assistance force calculation unit 256 calculates a virtual force.

For example, when the vertical guidance direction is the horizontal direction or upward relative to the horizontal direction, the assistance force calculation unit 256 sets the direction of the virtual force to be vertically upward. On the other hand, when the vertical guidance direction is downward relative to the horizontal direction, the assistance force calculation unit 256 sets the direction of the virtual force to be vertically downward.

For example, in a case where the direction of the virtual force is vertically upward, when the vertical height of the string holding position is less than a predetermined height H11, the assistance force calculation unit 256 sets the magnitude of the virtual force to a value proportional to the difference in height between the height H11 and the string holding position. Accordingly, the virtual force increases as the string holding position becomes lower. On the other hand, when the vertical height of the string holding position is equal to or more than the height H11, the assistance force calculation unit 256 sets the magnitude of the virtual force to zero.

For example, in a case where the direction of the virtual force is vertically downward, when the vertical height of the string holding position exceeds a predetermined height H12, the assistance force calculation unit 256 sets the magnitude of the virtual force to a value proportional to the difference in height between the string holding position and the height H12. Accordingly, the virtual force increases as the string holding position becomes higher. On the other hand, when the vertical height of the string holding position is equal to or less than the height H12, the assistance force calculation unit 256 sets the magnitude of the virtual force to zero.

In step S110, the assistance force calculation unit 256 calculates a tensile force of the string 212. Specifically, the assistance force calculation unit 256 calculates an assistance force, which is a resultant force of the guidance force and the virtual force. The assistance force calculation unit 256 sets the calculated assistance force as the tensile force of the string 212. The assistance force calculation unit 256 supplies information indicating the magnitude and the direction of the tensile force of the string 212 and the length of the string 212 to the travel direction setting unit 257.

In step S111, the travel direction setting unit 257 sets the travel direction of the drone 211. Specifically, the travel direction setting unit 257 calculates the travel direction of the drone 211 for generating the tensile force in the calculated direction at the string gripping position of the user based on the direction of the tensile force (assistance force) of the string 212 and the length of the string 212 (nearly equal to the relative distance between the user and the drone 211).

Note that, for example, when the direction of the assistance force is upward relative to the horizontal direction, the travel direction is set so that the drone 211 flies at a position higher than the string gripping position of the user. For example, when the direction of the assistance force is the horizontal direction, the travel direction is set so that the drone 211 flies at substantially the same height as the string gripping position of the user. For example, when the direction of the assistance force is downward relative to the horizontal direction, the travel direction is set so that the drone 211 flies at a position lower than the string gripping position of the user.

In step S112, the travel direction setting unit 257 determines whether the drone 211 can travel in the travel direction. For example, when the travel direction setting unit 257 determines that the drone 211 cannot travel in the travel direction due to an obstacle or the like based on the information regarding the environment around the drone 211 supplied from the environment recognition unit 253, the processing returns to step S105.

Thereafter, in step S112, the processing from step S105 to step S112 is repeated until it is determined that the drone 211 can travel in the travel direction. Accordingly, the guidance direction and the assistance force of the user, and the travel direction of the drone 211 are adjusted. In this case, the flight pattern may be changed as appropriate in step S105.

On the other hand, in step S112, when it is determined that the drone 211 can travel in the travel direction, the processing proceeds to step S113.

In step S113, the movement assistance system 201 applies the calculated tensile force. Specifically, the drive control unit 258 controls the drive unit 259 so that the drone 211 travels in the set travel direction and the tensile force having the calculated magnitude and direction is applied to the string holding position of the user via the string 212. That is, the drive control unit 258 controls the drive unit 259 so that the assistance force calculated in step S110 is applied as the tensile force by the string 212 to the string holding position of the user.

Thereafter, the processing returns to step S102, and the processing from step S102 to step S113 is repeated until it is determined in step S104 that the user has arrived at the target position. Therefore, until the user arrives at the target position, a flight pattern is selected (determined) as appropriate for each portion of the road that the user travels, such as a corner portion (curved road) or a flat linear portion, and guidance is performed according to the flight pattern.

On the other hand, when it is determined in step S104 that the user has arrived at the target position, the movement assistance processing ends.

In the above manner, the movement assistance system 201 selects the flight pattern and calculates the assistance force for guiding the user in the guidance direction corresponding to the selected flight pattern. The movement assistance system 201 then guides the user to the target position by applying the calculated assistance force to the user.

In this way, the user can be safely guided. Moreover, by selecting one flight pattern from at least one or more flight patterns, it is possible to guide the user more appropriately.

### State Transition of Movement Assistance System 201

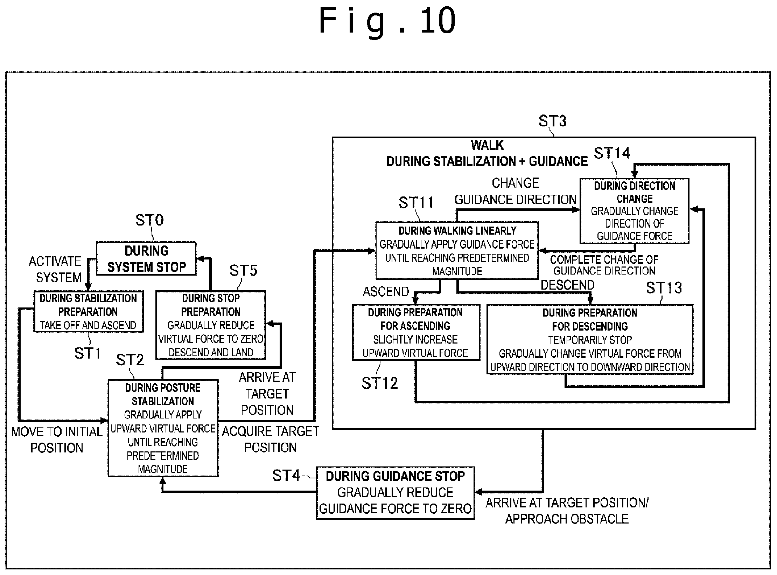

Next, a state transition of the movement assistance system 201 will be described with reference to Fig. 10.

Fig. 10 is a state machine diagram of the movement assistance system 201.

A state ST0 is a state in which the movement assistance system 201 is stopped. When the movement assistance system 201 is activated in the state ST0, the movement assistance system 201 transitions to a state ST1.

The state ST1 is a state in which preparation for stabilizing the posture of the user is performed. In the state ST1, the drone 211 takes off and ascends to an initial position (e.g., a predetermined height). When the drone 211 moves to the initial position in the state ST1, the movement assistance system 201 transitions to a state ST2.

The state ST2 is a state in which stabilization of the posture of the user is active. In the state ST2, a vertically upward virtual force is gradually applied to the user until reaching a predetermined magnitude. When a target position of the user is acquired in the state ST2, the movement assistance system 201 transitions to a state ST3. More specifically, the movement assistance system 201 transitions to a state ST11 in the state ST3.

The state ST3 is a state in which stabilization and guidance for the user's walking are performed.

The state ST11 is a state in which the user is guided to walk linearly. That is, the state ST11 is a state in which the user is guided to walk straight. In the state ST11, a guidance force is gradually applied until reaching a predetermined magnitude. When the user comes to an ascent of a staircase, a slope, or the like in the state ST11, the movement assistance system 201 transitions to a state ST12.

The state ST12 is a state in which preparation for guidance for the user to go up the staircase, the slope, or the like is performed. In the state ST12, the vertically upward virtual force is slightly increased. Thereafter, the movement assistance system 201 transitions to a state ST14.

In addition, when the user comes to a descent of a staircase, a slope, or the like in the state ST11, the movement assistance system 201 transitions to a state ST13.

The state ST13 is a state in which preparation for guidance for the user to go down the staircase, the slope, or the like is performed. In the state ST13, the movement assistance system 201 temporarily stops. Thereafter, the virtual force is gradually changed from the vertically upward direction to the vertically downward direction. Thereafter, the movement assistance system 201 transitions to the state ST14.

Further, in the state ST11, when the guidance direction is changed, the movement assistance system 201 transitions to the state ST14.

The state ST14 is a state in which the guidance direction is being changed. In the state ST14, the direction of the guidance force is gradually changed. When the guidance direction has been changed in the state ST14, the movement assistance system 201 transitions to the state ST11.

In any of the states ST11 to ST14, when the user arrives at the target position or the user approaches an obstacle, the movement assistance system 201 transitions to a state ST4.

The state ST4 is a state in which the guidance is stopped. In the state ST4, the magnitude of the guidance force is gradually reduced. Thereafter, when the guidance force becomes zero, the movement assistance system 201 transitions to the state ST2.

In the state ST2, when the user arrives at the target position, the movement assistance system 201 transitions to a state ST5.

The state ST5 is a state in which the movement assistance system 201 prepares to stop. In the state ST5, the magnitude of the virtual force is gradually reduced and finally set to zero. The drone 211 descends and lands. Thereafter, the movement assistance system 201 transitions to the state ST0.

In this way, the user is guided in the three-dimensional guidance direction by the guidance force, and the posture of the user is stabilized by the virtual force. As a result, the user can move in the guidance direction safely with stable motion without falling down. That is, the user can be safely guided.

Further, the virtual force and the guidance force gradually increase at the start of the guidance, and the virtual force and the guidance force gradually decrease at the end of the guidance. This prevents the user from losing balance due to sudden changes in the virtual force and the guidance force.

Further, at the start of the guidance, the virtual force and the guidance force are applied to the user in this order, and at the end of the guidance, the guidance force and the virtual force are set to zero in this order. This allows the user to start moving after the posture is stabilized and finish moving with the posture stabilized.

In addition, by guiding the user using the drone 211, it is possible to stably guide the user regardless of the state of a ground, a road surface, or the like on which the user moves. In addition, the environment around the user can be monitored from a high position, and the user can be guided more safely.

### 4. Modifications

Hereinafter, modifications of the embodiments of the present technology described above will be described.

### Modifications regarding Virtual Force and Guidance Force

For example, the movement assistance system 101 and the movement assistance system 201 may adjust the magnitude and the direction of the virtual force and the magnitude and the direction of the guidance force according to each user, the state of the user, the environment around the user, and the like.

Note that, hereinafter, adjusting at least one of the magnitude or the direction of the virtual force or the magnitude or the direction of the guidance force will be simply expressed as adjusting the virtual force and the guidance force.

Specifically, for example, the movement assistance system 101 and the movement assistance system 201 may adjust the balance between the virtual force and the guidance force based on at least one of the state of the user or the environment around the user. Accordingly, the balance between posture stabilization and guidance is appropriately adjusted according to, for example, whether or not the user is holding a cane, whether or not the walking function of the user is degraded, the age of the user, or the like.

For example, the movement assistance system 101 and the movement assistance system 201 may adjust the virtual force and the guidance force based on not only the position of the target part of the user but also the moving speed and the acceleration of the user. This makes it possible to more appropriately stabilize the posture of the user and guide the user.

For example, the movement assistance system 101 and the movement assistance system 201 may recognize the state of a road surface on which the user is moving based on map information or sensing information and adjust the virtual force and the guidance force based on the state of the road surface. Accordingly, for example, when the road surface has a bad condition (for example, when the road surface is rough, wet, or the like), the virtual force is increased, and thus, stabilization of the posture of the user is prioritized, and safety is improved.

For example, when it is not necessary to stabilize the posture of the user or guide the user, the drone 211 may follow the user without generating almost any tensile force in the string 212. This allows the user to move freely without paying attention to the drone 211.

For example, the movement assistance system 101 and the movement assistance system 201 may try several patterns of the magnitude and the direction of the virtual force and the magnitude and the direction of the guidance force before use. The movement assistance system 101 and the movement assistance system 201 may adjust the virtual force and the guidance force according to, for example, the exercise ability or the preference of the user. Accordingly, for example, it is possible to appropriately stabilize the posture of the user and guide the user according to the age, the height, the degree of disability, or the like of the user.

For example, the movement assistance system 101 and the movement assistance system 201 may recognize the user's reaction to the virtual force and the guidance force. The movement assistance system 101 and the movement assistance system 201 may dynamically adjust the virtual force and the guidance force according to the reaction of the user. This makes it possible to appropriately cope with a situation in which it is difficult to adjust the virtual force and the guidance force only in a single attempt, for example, on a slope, a staircase, an uneven road, or the like, and an environmental change such as wind or rain.

For example, the movement assistance system 101 and the movement assistance system 201 may adjust the virtual force and the guidance force based on the past behavior of the user. Accordingly, for example, in a place familiar to the user, the user can move freely by being guided simply. On the other hand, for example, in a place unfamiliar to the user, such as a place where the user goes for the first time, the user can move with peace of mind by being guided thoroughly.

For example, the movement assistance system 101 and the movement assistance system 201 may acquire obstacle information or the like from another device and adjust the virtual force and the guidance force based on the acquired obstacle information. Accordingly, for example, the virtual force and the guidance force are appropriately adjusted based on information regarding an obstacle and a road surface obtained by another robot traveling ahead, or the like, and safety is improved.

For example, the movement assistance system 101 and the movement assistance system 201 may recognize the states of surrounding people or acquire walking information from devices used by the surrounding people, and adjust the virtual force and the guidance force based on the result. This improves the safety of the user by, for example, increasing the virtual force at a place where a pedestrian in front has tripped over.

For example, the movement assistance system 201 may change the constraint conditions and the objective function used for setting the guidance direction, and set the guidance direction of the user and the travel direction of the drone 211 according to the user and the environment. For example, by considering the moving speed of the user as the constraint condition, it is possible to appropriately cope with a user who walks at a low speed. For example, by using an objective function that increases the distance to an obstacle as the objective function, the user can move more safely.

For example, the output of the motor of the drone 211 may be adjusted according to the moving speed of the user. This allows the user to freely change the moving speed. In addition, the tensile force of the string 212 can be generated more appropriately according to the moving speed of the user, and safety and convenience are improved.

For example, the movement assistance system 201 may learn a relationship between the output of the motor of the drone 211, the tensile force of the string 212, and the moving speed of the user. This makes it possible to generate a necessary tensile force and determine the output of the motor of the drone 211 suitable for the moving speed of the user. The moving speed of the user can be calculated or predicted by the user recognition unit 254 tracking the position of the user over time.

### Modifications regarding String

For example, an elastic material such as rubber or a spring may be used for the string 212. This allows the user to be guided more gently.

For example, the height at which the drone 211 flies and the length of the string 212 may be adjusted depending on the user. This allows a user ranging from a child to an adult to use the movement assistance system 201 according to, for example, the height of the user. In addition, the movement assistance system 201 can be used indoors by adjusting its height based on the ceiling height.

For example, a sensor capable of recognizing the shape of the string 212 may be provided at the movement assistance system 201. This makes it possible to plan the movement of the drone 211 to return the string 212 to its original state, for example, when the string 212 is caught or entangled with something.

For example, the drone 211 may be able to automatically attach and detach the string 212, and may be able to autonomously move alone in a state where the string 212 is detached. This enables the drone 211 to go ahead to check the surrounding situation or to request support from surrounding people.

For example, a string-shaped member such as a wire or a chain can be used instead of the string 212.

### Other Modifications

For example, the movement assistance system 201 may detect an abnormality such as falling down by recognizing that the user pulls the string 212. Then, for example, when detecting an abnormality, the movement assistance system 201 may perform an operation of avoiding danger, such as moving the drone 211 away from the user or loosening the string 212.

For example, functions of voice recognition, voice input, voice guidance, and the like may be added to the movement assistance system 101 and the movement assistance system 201. This makes it possible to appropriately cope with a case where it is difficult to guide the user by applying a force or a case where it is difficult for the user to operate by hand.

For example, the movement assistance system 201 may plan the movement routes of the user and the drone 211 in consideration of the movements of surrounding mobile bodies (for example, person, drone, vehicle, and the like). This prevents the user and the drone 211 from colliding with the surrounding mobile bodies, and prevents the string 212 from becoming entangled with the surrounding mobile bodies.

For example, the drone 211 may be able to be customized by updating software, replacing hardware, or the like. For example, this enables the drone 211 to additionally have functions of capturing an image with a camera, illuminating the user's feet with a light, outputting audio guidance, and the like.

For example, in the case of a mobile-type movement assistance system, a mobile body and a control device that controls the mobile body may be separated from each other. For example, the control device may acquire information regarding the state of the user and the surrounding environment from the mobile body, calculate a virtual force and a guidance force based on the acquired information, and calculate an assistance force, which is a resultant force of the virtual force and the guidance force. Further, for example, the control device may remotely control the drive unit of the mobile body so that the assistance force is applied to the target part of the user.

For example, the target part to which the assistance force is applied is not necessarily fixed to one place, and can be moved.

### 5. Others

### Configuration Example of Computer

The series of processing operations described above can be executed by hardware or can be executed by software. In a case in which the series of processing operations is executed by software, a program constituting the software is installed in a computer. Herein, the computer includes a computer incorporated in dedicated hardware, a general-purpose personal computer, for example, that can execute various functions by the installation of various programs, and the like.

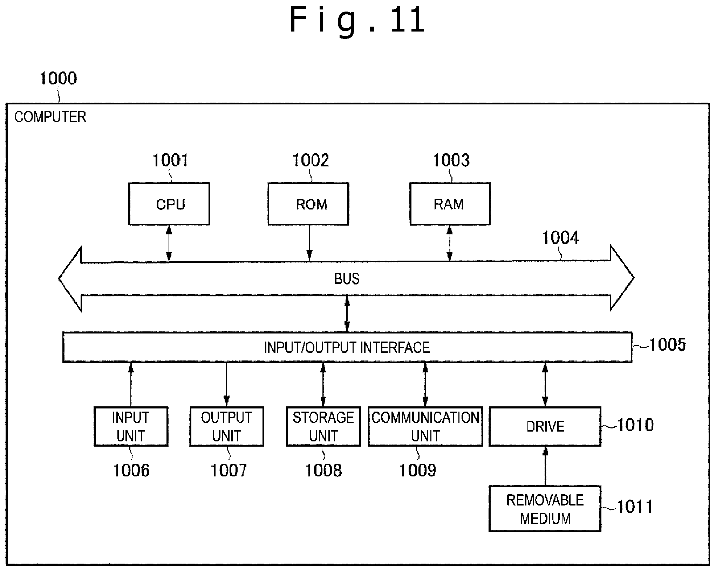

Fig. 11 is a block diagram illustrating a configuration example of hardware of the computer that executes the above-described series of processing operations by the program.

In a computer 1000, a central processing unit (CPU) 1001, a read only memory (ROM) 1002, and a random access memory (RAM) 1003 are connected to one another via a bus 1004.

Furthermore, an input/output interface 1005 is connected to the bus 1004. An input unit 1006, an output unit 1007, a storage unit 1008, a communication unit 1009, and a drive 1010 are connected to the input/output interface 1005.

The input unit 1006 is composed of an input switch, a button, a microphone, an imaging element, and the like. The output unit 1007 is composed of a display, a speaker, and the like. The storage unit 1008 is composed of a hard disk, a nonvolatile memory, and the like. The communication unit 1009 is composed of a network interface and the like. The drive 1010 drives a removable medium 1011 such as a magnetic disk, an optical disk, a magneto-optical disk, or a semiconductor memory.

In the computer 1000 configured as described above, the CPU 1001, for example, loads a program stored in the storage unit 1008 into the RAM 1003 via the input/output interface 1005 and the bus 1004, and executes the program, thereby performing the above-mentioned series of processing operations.

The program executed by the computer 1000 (CPU 1001) can be provided by being stored in the removable medium 1011 as a package medium or the like, for example. Further, the program can be provided via a wired or wireless transmission medium such as a local area network, the Internet, or digital satellite broadcasting.

In the computer 1000, the program can be installed in the storage unit 1008 via the input/output interface 1005 by mounting the removable medium 1011 on the drive 1010. The program can also be received by the communication unit 1009 via a wired or wireless transmission medium and installed in the storage unit 1008. Other than the above manners, the program can be pre-installed in the ROM 1002 or the storage unit 1008.

Note that the program executed by the computer may be a program in which processing is performed in time series in the order described in the present specification, or may be a program in which processing is performed in parallel or at a necessary timing such as when a call is performed.

Additionally, in the present specification, a system refers to a collection of a plurality of components (devices, modules (parts), and the like), regardless of whether all of the components are in the same housing. Therefore, the system refers to both a plurality of devices housed in separate housings and connected via a network, and one device in which a plurality of modules are housed in one housing.

Further, the embodiments of the present technology are not limited to the above-described embodiments, and various modifications can be made without departing from the gist of the present technology.

For example, the present technology can have a configuration of cloud computing in which one function is shared and processed in cooperation by a plurality of devices via a network.

Further, each step described in the above-described flowchart can be performed by one device or can be shared and executed by a plurality of devices.

Further, when a single step includes multiple processing operations, the multiple processing operations included in that single step can be executed by a single device, or can be shared and executed by multiple devices.

### Combination Example of Configurations

Note that the present technology can also have the following configurations.

(1) A movement assistance device including:
   a movement route determination unit configured to select, from at least one or more travel patterns, one travel pattern of guiding a user to a target position; and
   a drive control unit configured to control a drive unit such that an assistance force is applied to the user, the assistance force being a resultant force of a virtual force and a guidance force, the virtual force being a force of stabilizing a posture of the user, the guidance force being a force of guiding the user and corresponding to the selected travel pattern.
(2) The movement assistance device according to (1), wherein
   the movement route determination unit selects the travel pattern, based on at least one of information regarding an environment around the user or information regarding the user.
(3) The movement assistance device according to (2), wherein
   the information regarding the environment around the user includes at least one of information regarding a road that the user travels when being guided or information regarding an obstacle around the user.
(4) The movement assistance device according to (3), wherein
   the information regarding the road that the user travels includes information regarding a shape of the road.
(5) The movement assistance device according to any one of (2) to (4), wherein
   the information regarding the user includes at least one of information set by the user, information regarding an urgency level of guidance, information regarding a passage history of the user, or information regarding use of the movement assistance device by the user.
(6) The movement assistance device according to any one of (1) to (5), wherein
   when there is a curved road at a time of guiding the user, the movement route determination unit selects one travel pattern from two or more of the travel patterns including a travel pattern in which the user is moved linearly, then rotated in a stopped state, and further moved linearly.
(7) The movement assistance device according to any one of (1) to (5), wherein
   when there is a curved road at a time of guiding the user, the movement route determination unit selects one travel pattern from two or more of the travel patterns including a travel pattern in which the user is moved in a curved manner.
(8) The movement assistance device according to any one of (1) to (7), wherein
   a direction of the virtual force is set to a vertical direction, and
   a direction of the guidance force is set to a guidance direction that is a direction of guiding the user.
(9) The movement assistance device according to (8), wherein
   a magnitude of the virtual force changes depending on a vertical height of a part of a body of the user to which the assistance force is applied.
(10) The movement assistance device according to any one of (1) to (7), wherein
   a magnitude of the guidance force is constant.
(11) The movement assistance device according to (9), wherein
   the part is a hand of the user.
(12) The movement assistance device according to any one of (1) to (11), wherein
   the drive control unit controls the drive unit of a mobile body to move the mobile body, thereby applying the assistance force to the user.
(13) The movement assistance device according to (12), wherein
   the user and the mobile body are connected by a string-like member, and
   the assistance force is applied to the user as a tensile force by the string-like member.
(14) The movement assistance device according to (13), wherein
   the mobile body is a drone.
(15) The movement assistance device according to any one of (12) to (14), further including:
   the drive unit, wherein
   the drive control unit is provided at the mobile body.
(16) The movement assistance device according to any one of (1) to (11), further including:
   the drive unit, wherein
   the movement assistance device is worn on a predetermined part of a body of the user, and
   the drive control unit controls the drive unit to apply the assistance force to the predetermined part.
(17) The movement assistance device according to (16), wherein
   the predetermined part is a finger, a wrist, an arm, a back, a shoulder, or a waist of the user.
(18) A movement assistance method including:
   selecting, by a movement assistance device, from at least one or more travel patterns, one travel pattern of guiding a user to a target position; and
   controlling, by the movement assistance device, a drive unit such that an assistance force is applied to the user, the assistance force being a resultant force of a virtual force and a guidance force, the virtual force being a force of stabilizing a posture of the user, the guidance force being a force of guiding the user and corresponding to the selected travel pattern.

Note that the effects described in the present specification are merely examples, and are not limited, and other effects may be obtained.

### Reference Signs List

1 Balloon-type robot, 11 Flight unit, 12 String, 101 Movement assistance system, 111 Guidance direction setting unit, 112 Position information acquisition unit, 113 Assistance force calculation unit, 114 Drive control unit, 115 Drive unit, 201 Movement assistance system, 211 Drone, 212 String, 251 Target position setting unit, 252 Movement route determination unit, 253 Environment recognition unit, 254 User recognition unit, 255 Guidance direction setting unit, 256 Assistance force calculation unit, 257 Travel direction setting unit, 258 Drive control unit, 259 Drive unit

## Claims

1. A movement assistance device comprising:
a movement route determination unit configured to select, from at least one or more travel patterns, one travel pattern of guiding a user to a target position; and
a drive control unit configured to control a drive unit such that an assistance force is applied to the user, the assistance force being a resultant force of a virtual force and a guidance force, the virtual force being a force of stabilizing a posture of the user, the guidance force being a force of guiding the user and corresponding to the selected travel pattern.

2. The movement assistance device according to claim 1, wherein
the movement route determination unit selects the travel pattern, based on at least one of information regarding an environment around the user or information regarding the user.

3. The movement assistance device according to claim 2, wherein
the information regarding the environment around the user includes at least one of information regarding a road that the user travels when being guided or information regarding an obstacle around the user.

4. The movement assistance device according to claim 3, wherein
the information regarding the road that the user travels includes information regarding a shape of the road.

5. The movement assistance device according to claim 2, wherein
the information regarding the user includes at least one of information set by the user, information regarding an urgency level of guidance, information regarding a passage history of the user, or information regarding use of the movement assistance device by the user.

6. The movement assistance device according to claim 1, wherein
when there is a curved road at a time of guiding the user, the movement route determination unit selects one travel pattern from two or more of the travel patterns including a travel pattern in which the user is moved linearly, then rotated in a stopped state, and further moved linearly.

7. The movement assistance device according to claim 1, wherein
when there is a curved road at a time of guiding the user, the movement route determination unit selects one travel pattern from two or more of the travel patterns including a travel pattern in which the user is moved in a curved manner.

8. The movement assistance device according to claim 1, wherein
a direction of the virtual force is set to a vertical direction, and
a direction of the guidance force is set to a guidance direction that is a direction of guiding the user.

9. The movement assistance device according to claim 8, wherein
a magnitude of the virtual force changes depending on a vertical height of a part of a body of the user to which the assistance force is applied.

10. The movement assistance device according to claim 1, wherein
a magnitude of the guidance force is constant.

11. The movement assistance device according to claim 9, wherein
the part is a hand of the user.

12. The movement assistance device according to claim 1, wherein
the drive control unit controls the drive unit of a mobile body to move the mobile body, thereby applying the assistance force to the user.

13. The movement assistance device according to claim 12, wherein
the user and the mobile body are connected by a string-like member, and
the assistance force is applied to the user as a tensile force by the string-like member.

14. The movement assistance device according to claim 13, wherein
the mobile body is a drone.

15. The movement assistance device according to claim 12, further comprising:
the drive unit, wherein
the drive control unit is provided at the mobile body.

16. The movement assistance device according to claim 1, further comprising:
the drive unit, wherein
the movement assistance device is worn on a predetermined part of a body of the user, and
the drive control unit controls the drive unit to apply the assistance force to the predetermined part.

17. The movement assistance device according to claim 16, wherein
the predetermined part is a finger, a wrist, an arm, a back, a shoulder, or a waist of the user.

18. A movement assistance method comprising:
selecting, by a movement assistance device, from at least one or more travel patterns, one travel pattern of guiding a user to a target position; and
controlling, by the movement assistance device, a drive unit such that an assistance force is applied to the user, the assistance force being a resultant force of a virtual force and a guidance force, the virtual force being a force of stabilizing a posture of the user, the guidance force being a force of guiding the user and corresponding to the selected travel pattern.
